# EUROPÄISCHE PATENTSCHRIFT

(11) **EP 1 936 065 B1**
(45) Veröffentlichungstag und Bekanntmachung des Hinweises auf die Patenterteilung: **06.01.2010**
(21) Anmeldenummer: 07022155.1
(22) Anmeldetag: 15.11.2007
(51) Int. Cl.: E04F 13/08, F16B 5/02, F16B 13/00, F16B 39/10

(54) **Abstandshalter für die Befestigung eines Gegenstands an einer eine Dämmschicht und eine Putzschicht aufweisenden Wand**
Distancer for attaching an object to a wall with an insulating or plaster layer
Entretoise pour la fixation d'un objet sur un mur doté d'une couche isolante et d'une couche de mortier

(30) Priorität: 22.12.2006 DE 102006061107
(43) Veröffentlichungstag der Anmeldung: 25.06.2008
(73) Patentinhaber: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(56) Entgegenhaltungen:
- EP-A- 1 184 577
- EP-A- 1 724 412
- DE-U1- 8 903 833

## Beschreibung

Die Erfindung betrifft einen Abstandshalter für die Befestigung eines Gegenstands an einer eine Dämmschicht und eine Putzschicht aufweisenden Wand, also an einem sog. Wärmedämmverbundsystem (WDVS), mit den Merkmalen des Oberbegriffs des Anspruchs 1.

Zur thermischen Isolierung werden Wände von heizbaren Gebäuden mit einer Wärmedämmschicht versehen, auf der in der Regel aus optischen Gründen und zum Schutz der Dämmschicht vor Witterungseinflüssen und vor mechanischer Beschädigung eine Putzschicht aufgebracht ist. Zur Befestigung leichter Lasten wie beispielsweise Briefkästen und Lampen kann die Dämmschicht ausreichen. Zur Befestigung größerer Lasten wie beispielsweise einer Markise reicht die Festigkeit der beispielsweise aus Polystyrol bestehenden Dämmschicht nicht aus, hier muss eine Verankerung durch die Dämmschicht hindurch in der Wand erfolgen.

Zu diesem Zweck offenbart die DE 10 2005 022 449 A1 einen Abstandshalter, der aus einer Gewindestange als Ankerbolzen und einer auf ein Ende der Gewindestange aufgeschraubten Abstandshülse aus Kunststoff besteht. Die Gewindestange wird mit Mörtel in einem Bohrloch in der Wand verankert. Sie steht aus der Wand in die Dämmschicht vor. Die Abstandshülse besteht wie erwähnt aus Kunststoff, ist also thermisch isolierend. Sie verlängert die Gewindestange koaxial an dessen hinterem Ende. Die Ankerhülse ist im Wesentlichen konisch und weist ein axiales Durchgangsloch mit einem Innengewinde größeren Durchmessers auf, mit dem die Abstandshülse auf das Ende der Gewindestange geschraubt ist, und einem Innengewinde kleineren Durchmessers, in das eine Befestigungsschraube zur Befestigung beispielsweise der Markise schraubbar ist. Zur Erzielung einer ausreichenden Festigkeit wird jeder Markisenarm mit zwei oder mehr Abstandshaltern befestigt.

Aufgabe der Erfindung ist, einen Abstandshalter für die Befestigung eines Gegenstands an einer eine Dämmschicht und eine Putzschicht aufweisenden Wand vorzuschlagen, der eine Sicherung gegen Mitdrehen beim Einschrauben einer Befestigungsschraube in den Abstandshalter bei der Befestigung des Gegenstands aufweist.

Diese Aufgabe wird erfindungsgemäß durch die Merkmale des Anspruchs 1 gelöst. Der erfindungsgemäße Abstandshalter weist eine Schraube mit einem Isolierkörper an ihrem hinteren Ende auf. Mit der Schraube ist der Abstandshalter zur Verankerung in einen Dübel beispielsweise aus Kunststoff oder Metall in einem Bohrloch in einer Wand einschraubbar. Der Isolierkörper besteht aus einem thermisch isolierenden Werkstoff, beispielsweise aus Kunststoff. Er verlängert die Schraube koaxial über ihr hinteres Ende hinweg und vermeidet dadurch eine Kältebrücke. Der Isolierkörper ist im Wesentlichen ein Rotationskörper, womit gemeint ist, dass eine Mantelfläche des Isolierkörpers zumindest näherungsweise einen Rotationskörper bildet. Der Begriff "Rotationskörper" ist mehr anhand der Funktion, den Abstandshalter mit dem Isolierkörper mit einer Schraubbewegung in die Dämmschicht einzubringen, und weniger anhand der geometrischen Form zu verstehen. Die Schraubbewegung ist ein axialer Vorschub und gleichzeitig eine Drehbewegung bedingt durch das Einschrauben des Abstandshalters mit seiner Schraube in einen Dübel in der Wand. In seinem Umfang kann der Isolierkörper Ausnehmungen wie Mulden, Löcher, Rillen, Nuten oder Rippenzwischenräume aufweisen. Er soll trotzdem als Rotationskörper im Sinne der Erfindung verstanden werden. Nicht erforderlich ist, dass die Schraube einen Kopf an ihrem hinteren Ende aufweist, an dem der Isolierkörper angebracht ist.

Am hinteren Ende weist der Isolierkörper ein Einschraubloch zum Einschrauben einer Befestigungsschraube von hinten in den Abstandshalter auf. Das Einschraubloch dient zur Befestigung des zu befestigenden Gegenstandes am Abstandshalter mittels einer Befestigungsschraube. Auch wenn das Loch als Einschraubloch bezeichnet ist, muss es kein Innengewinde aufweisen und die Befestigung im Einschraubloch kann mittels eines Dübels erfolgen.

Der erfindungsgemäße Abstandshalter weist eine Abdeckkappe auf, die durch Formschluss drehfest auf ein hinteres, der Schraube abgewandtes Ende des Isolierkörpers aufsetzbar ist. Ein Umriss der Abdeckkappe ist nicht kreisrund, sondern so geformt, dass die Abdeckkappe durch Einbringen in die Putzschicht in einen durch Formschluss drehfesten Eingriff mit der Putzschicht gelangt. Zum formschlüssigen Eingriff steht die Abdeckkappe an mindestens einer Stelle ihres Umfangs seitlich über den Isolierkörper über. Wenn der erfindungsgemäße Abstandshalter wie vorgesehen durch eine Putzschicht und eine Dämmschicht hindurch in einer Wand verankert ist und die Abdeckkappe auf das hintere Ende des Isolierkörpers aufgesetzt und dabei in die Putzschicht eingebracht ist, ist die Abdeckkappe durch ihren formschlüssigen Eingriff mit der Putzschicht gegen Drehen gesichert. Da die Abdeckkappe durch Formschluss drehfest mit dem Isolierkörper des Abstandshalters ist, hält die in der Putzschicht drehfeste Abdeckkappe den Isolierkörper und damit den Abstandshalter gegen Drehen. Dadurch kann eine Befestigungsschraube in das Einschraubloch im hinteren Ende des Isolierkörpers des Abstandshalters eingeschraubt werden, ohne dass sich der Abstandshalter mit der Befestigungsschraube mitdreht. Ist der Abstandshalter wie vorgesehen gesetzt, ist das hintere Ende seines Isolierkörpers bündig mit der Putzschicht oder unter eine Oberfläche der Putzschicht versenkt. Beim Aufsetzen auf das hintere Ende des Isolierkörpers des Abstandshalters wird die Abdeckkappe somit in die Putzschicht eingebracht, sie kommt dabei wie vorgesehen in den drehfesten Eingriff mit der Putzschicht.

Weiterer Vorteil der erfindungsgemäßen Abdeckkappe ist ein Abstützen des Abstandshalters gegen eine Querlast in der Putzschicht bis zum Aushärten einer in eine Fuge zwischen dem hinteren Ende des Isolierkörpers und der Putzschicht eingebrachten Dichtmasse und auch zeitlich darüber hinaus.

Zur Drehsicherung der Abdeckkappe in der Putzschicht sieht eine Ausgestaltung der Erfindung die Ausbildung der Abdeckkappe mit einem Mehrkant vor, dessen Kanten seitlich über den Isolierkörper überstehen. Wird die Abdeckkappe beim Aufsetzen auf das hintere Ende des Isolierkörpers des Abstandshalters aufgesetzt und dabei in die Putzschicht eingedrückt, formt sich der Mehrkant in den Putz ein und wird an seinen Kanten durch Formschluss mit der Putzschicht drehfest gehalten.

Eine andere Ausgestaltung der Erfindung sieht mindestens eine, vorzugsweise mehrere seitlich nach außen abstehende Nasen, Rippen oder dgl. Elemente als Drehsicherungseinrichtung vor, die seitlich über den Isolierkörper überstehen. Die Drehsicherungseinrichtung formt sich beim Aufsetzen der Abdeckkappe auf das hintere Ende des Isolierkörpers des Abstandshalters wie die Kanten des Mehrkants in die Putzschicht ein, so dass die Abdeckkappe drehfest gehalten ist. Es kann auch der Mehrkant mit der Drehsicherungseinrichtung kombiniert sein.

Die drehfeste Verbindung der Abdeckkappe mit dem Isolierkörper des Abstandshalters ist ebenfalls in vielfältiger Weise möglich. Eine Ausgestaltung der Erfindung sieht vor, dass der Abstandshalter einen Werkzeugsitz zu einem durch Formschluss drehfesten Ansetzen eines Drehwerkzeugs aufweist. Das Drehwerkzeug kann beispielsweise ein Schraubendreher, Kreuzschlitz-Schraubendreher, ein Innen- oder Außenmehrkantschlüssel, ein Sternschlüssel oder dgl. sein. Der Werkzeugsitz des Isolierkörpers des Abstandshalters ist dazu komplementär. Der Werkzeugsitz ist dementsprechend beispielsweise ein Querschlitz, Kreuzschlitz, Außen- oder Innenmehrkant oder ein Innenstern. Eine Ausgestaltung der Erfindung nutzt den Werkzeugsitz des Isolierkörpers, indem die Abdeckkappe eine zum Werkzeugsitz des Isolierkörpers komplementäre Aufnahme aufweist, mit der die Abdeckkappe durch Formschluss drehfest auf den Werkzeugsitz des Isolierkörpers aufsetzbar ist. Ist der Werkzeugsitz des Isolierkörpers ein Innenmehrkant, Innenstern oder dgl., in die die Abdeckkappe mit ihrer komplementären Aufnahme eingebracht wird, so soll auch das als "Aufsetzen" im Sinne der Erfindung verstanden werden.

Eine Ausgestaltung der Erfindung sieht vor, dass die Abdeckkappe eine lochscheibenförmige Kopfplatte als Anlage für einen zu befestigenden Gegenstand aufweist. Die Kopfplatte steht nach Art eines Radialflanschs seitlich nach außen und ggf. nach innen ab. Mit ihrem seitlich überstehenden Rand liegt die Kopfplatte auf einer Oberfläche der Putzschicht auf, wenn die Abdeckkappe wie vorgesehen in die Putzschicht eingebracht ist. Die Kopfplatte bildet eine gute Anlage für den zu befestigenden Gegenstand, insbesondere, wenn der zu befestigende Gegenstand ein übergroßes Loch oder ein Langloch zu seiner Befestigung mit der durch ihn gesteckten und in das Einschraubloch des Isolierkörpers des Abstandshalters eingeschraubten Befestigungsschraube aufweist.

Die Erfindung wird nachfolgend anhand eines in der Zeichnung dargestellten Ausführungsbeispiels näher erläutert. Es zeigen:
- Figur 1: einen erfindungsgemäßen Abstandshalter in perspektivischer Darstellung; und
- Figur 2: den Abstandshalter aus Figur 1 in verankertem Zustand in einer Schnittdarstellung.

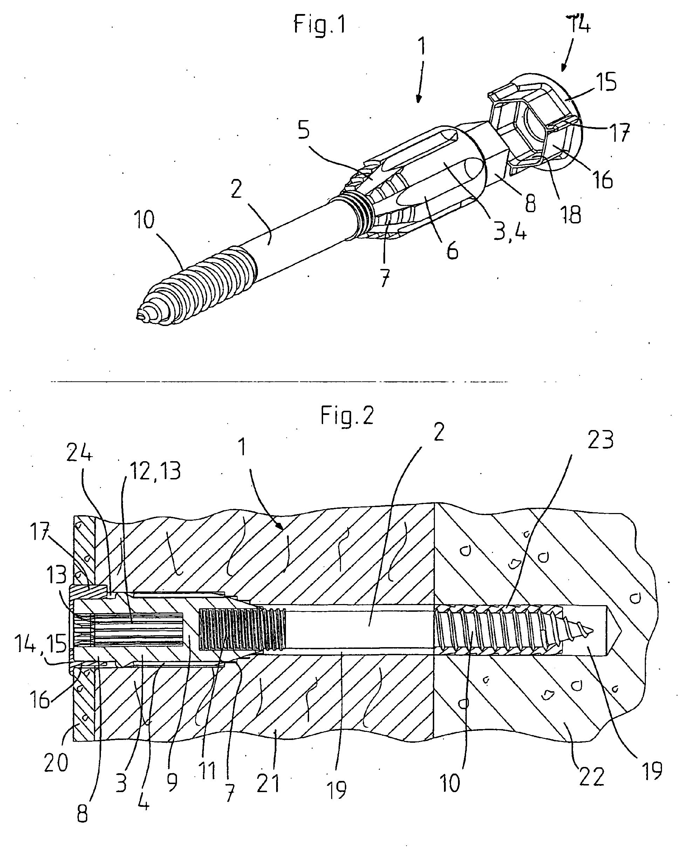

Der in Figur 1 dargestellte, erfindungsgemäße Abstandshalter 1 weist eine Schraube 2 mit einen Isolierkörper 3 an ihrem hinteren Ende auf. Der Isolierkörper 3 besteht aus einem thermisch isolierenden Werkstoff, nämlich aus Kunststoff. Er ist koaxial zur Schraube 2 und kann als Rotationskörper aufgefasst werden. Er weist einen Mittelabschnitt 4 mit zylinderförmiger Mantelfläche und einen sich kegelstumpfförmig verjüngenden vorderen Abschnitt 5 auf, aus dem die Schraube 2 vorsteht. In seinem Umfang weist der Isolierkörper 3 längs verlaufende Rillen 6 auf, die sich über seinen zylindrischen Mittelabschnitt 4 und den kegelstumpfförmigen vorderen Abschnitt 5 erstrecken. Die Rillen 6 bilden Bohrmehlnuten. Der kegelstumpfförmige vordere Abschnitt 5 weist treppenstufenförmige Zähne 7 auf, durch die der Isolierkörper 3 als Lochfräser ausgebildet ist.

An seinem hinteren, der Schraube 2 fernen Ende geht der Isolierkörper 3 über eine Ringstufe in einen Außensechskant 8 über, der einen Werkzeugsitz zu einem drehfesten Ansetzen eines nicht dargestellten Drehwerkzeugs wie beispielsweise einer Sechskantnuss oder einem Rohrschlüssel dient. Ein Eckmaß des Sechskants 8 ist um so viel kleiner als ein Durchmesser des zylindrischen Mittelabschnitts 4 des Isolierkörpers 3, dass eine auf den Sechskant 8 gesteckte Sechskantnuss oder ein Rohrschlüssel nicht nach außen über den Umfang des Isolierkörpers 3 übersteht.

Der Isolierkörper 3 ist hülsenförmig, er weist zwei koaxiale Löcher auf, die durch eine Querwand 9 (Figur 2) voneinander getrennt sind. Die Schraube 2 ist im Ausführungsbeispiel eine sog. Stockschraube, sie weist ein erstes Gewinde 10 an ihrem vorderen, dem Isolierkörper 3 fernen Ende, und ein zweites Gewinde 11 an ihrem hinteren Ende auf, mit der sie in das eine Loch des Isolierkörpers 3 geschraubt ist. Die Schraube 2 ist in das Loch im vorderen Ende des Isolierkörpers 3 geschraubt, das am kegelstumpfförmigen vorderen Abschnitt 5 des Isolierkörpers 3 mündet. Die Verwendung einer Stockschraube ist nicht zwingend, die Schraube 2 kann zusätzlich oder statt des Einschraubens in den Isolierkörper 3 geklebt oder mit dem Isolierkörper 3 umspritzt sein. Das erste Gewinde 10 am vorderen Ende der Schraube 2 ist im dargestellten und beschriebenen Ausführungsbeispiel der Erfindung ein selbstschneidendes Holzschraubengewinde. Auch das ist nicht zwingend, beispielsweise bei der Verankerung des Abstandshalters 1 mit einem Metalldübel kann das erste Gewinde 10 ein Maschinengewinde sein (nicht dargestellt). Das Loch im hinteren Ende des Isolierkörpers 3 wird nachfolgend als Einschraubgewinde 12 bezeichnet, es dient zur Befestigung eines Gegenstands am Abstandshalter 1 mit einer Schraube. Zur Verwendung einer ihr Gewinde selbstschneidenden Befestigungsschraube kann das Einschraubloch 12 wie im Ausführungsbeispiel gewindelos sein. Auch kann das Einschraubloch 12 ein Innengewinde aufweisen (nicht dargestellt). Auch eine Befestigung mittels eines nicht dargestellten Spreizdübels, der in das Einschraubloch 12 gesteckt wird und in den anschließend eine Befestigungsschraube geschraubt wird, ist möglich (nicht dargestellt). Im dargestellten und beschriebenen Ausführungsbeispiel weist das Einschraubloch 12 Längsrippen 13 auf, die das Einschrauben einer ihr Gewinde selbstschneidenden Schraube erleichtern und außerdem eine Durchmessertoleranz vergrößern.

Der erfindungsgemäße Abstandshalter 1 weist eine Abdeckkappe 14 auf, die im dargestellten und beschriebenen Ausführungsbeispiel wie der Isolierkörper 3 aus Kunststoff besteht. Die Abdeckkappe 14 weist eine lochscheibenförmige Kopfplatte 15 auf, von deren einer Seite ein Kragen 16 absteht, der die Form eines Sechskantrohrs aufweist. Von Kanten des Kragens 16 stehen Längsrippen 17 als Drehsicherungseinrichtung radial nach außen ab. Mit dem sechskantrohrförmigen Kragen 16 kann die Abdeckkappe 14 auf den Sechskant 8 des Isolierkörpers 3 des Abstandshalters 1 aufgesetzt werden. Durch die Sechskantrohrform des Kragens 16 ist die Abdeckkappe 14 durch Formschluss drehfest auf dem den Werkzeugsitz bildenden Sechskant 8 des Isolierkörpers 3 gehalten. Der Kragen 16, genau genommen sein einen Innensechskant bildender Innenumfang, bildet eine zu dem den Werkzeugsitz bildenden Sechskant 8 des Isolierkörpers 3 komplementäre Aufnahme 18.

Zu seiner Verwendung wird der Abstandshalter 1 wie in Figur 2 dargestellt in einem Loch 19 verankert, das durch eine Putzschicht 20 und eine Dämmschicht 21 bis in eine Wand 22 gebohrt ist, auf der die Dämmschicht 21 und die Putzschicht 20 aufgebracht sind. Die Verankerung erfolgt mittels eines Spreizdübels 23, der in das Loch 19 in der Wand 22 eingebracht ist. Der Abstandshalter 1 wird mit dem ersten Gewinde 10 seiner Schraube 2 in den Dübel 23 eingeschraubt und spreizt den Spreizdübel 23 dabei in an sich bekannter Weise auf, so dass der Abstandshalter 1 in der Wand 22 verankert ist. Ein Drehantrieb des Abstandshalters 2 zum Einschrauben in den Spreizdübel 23 erfolgt an seinem hinteren Ende an dem den Werkzeugsitz bildenden Mehrkant 8 des Isolierkörpers 3. Beim Einschrauben weiten die Zähne 7 am kegelstumpfförmigen vorderen Abschnitt 5 des Isolierkörpers 3, die den Isolierkörper 3 als Lochfräser ausbilden, das Loch 19 in der Putzschicht 20 und soweit der Isolierkörper 3 reicht in der Dämmschicht 21 auf den Durchmesser des Isolierkörpers 3 auf. Der Abstandshalter 1 ist wie vorgesehen gesetzt, wenn sein hinteres, den Mehrkant 8 aufweisendes Ende mit der Putzschicht 20 bündig oder ein kurzes Stück unter einer Oberfläche der Putzschicht 20 versenkt ist.

Eine den Sechskant 8 umschließende Fuge 24 zwischen dem Sechskant 8 und der Putzschicht 20 wird mit einer nicht dargestellten, aushärtenden Dichtmasse abgedichtet. Anschließend wird die Abdeckkappe 14 auf das hintere Ende des Isolierkörpers 3 des Abstandshalters 1 aufgesetzt, d.h. die Abdeckkappe 14 wird mit ihrem sechskantrohrförmigen Kragen 16 auf den Sechskant 8 des Isolierkörpers 3 gesteckt. Die radial nach außen abstehenden Längsrippen 17 der Abdeckkappe 14 bilden eine Drehsicherungseinrichtung, die sich in die Putzschicht 20 einformt, wodurch die Abdeckkappe 14 durch formschlüssigen Eingriff in die Putzschicht 20 drehfest gehalten ist. Da die Abdeckkappe 14 drehfest mit dem Isolierkörper 3 des Abstandshalters 1 ist, sichert sie den Isolierkörper 3 gegen Drehen. Dadurch kann eine nicht dargestellte Befestigungsschraube in das Einschraubloch 12 des Isolierkörpers 3 geschraubt werden, ohne dass sich der Abstandshalter 1 mitdreht. Die Längsrippen 17 und die Kanten des sechskantrohrförmigen Kragens 16 stützen den Isolierkörper 3 und damit den Abstandshalter 1 gegen eine Querlast in der Putzschicht 20 ab, bis die Dichtmasse in der Fuge 24 ausgehärtet ist. Nach dem Aushärten übernimmt die Dichtmasse die Abstützung des hinteren Endes des Abstandshalters 1 gegen Querlast in der Putzschicht 20 vollständig oder teilweise.

Die lochscheibenförmige Kopfplatte 15 der Abdeckkappe 14 bildet eine Anlagefläche zur Befestigung eines nicht dargestellten Gegenstands an der die Dämmschicht 21 und die Putzschicht 20 aufweisenden Wand 22. Ein solcher Gegenstand kann beispielsweise eine Markise sein, deren Arme vorzugsweise jeweils mit mehreren Abstandshaltern 1 an der Wand 22 befestigt werden (nicht dargestellt).

## Patentansprüche

1. Abstandshalter für die Befestigung eines Gegenstands an einer eine Dämmschicht (21) und eine Putzschicht (20) aufweisenden Wand (22), mit einer Schraube (2), und mit einem Isolierkörper (3), der im Wesentlichen ein Rotationskörper ist, der koaxial zur Schraube (2) und die Schraube (2) über ihr hinteres Ende hinweg verlängernd am hinteren Ende der Schraube (2) angebracht ist, der ein Einschraubloch (12) an einem hinteren Ende zum Einschrauben einer Befestigungsschraube von hinten in den Abstandshalter (1) aufweist, **dadurch gekennzeichnet, dass** der Isolierkörper (3) eine Abdeckkappe (14) aufweist, die durch Formschluss drehfest auf ein hinteres, der Schraube (2) abgewandtes Ende des Isolierkörpers (3) aufsetzbar ist, und dass die Abdeckkappe (14) einen nicht kreisrunden Umriss aufweist, der zu einem formschlüssigen Eingriff mit der Putzschicht (20) zur Drehsicherung an mindestens einer Umfangsstelle seitlich über den Isolierkörper (3) übersteht.

2. Abstandshalter nach Anspruch 1, **dadurch gekennzeichnet, dass** die Abdeckkappe (14) einen Mehrkant (16) aufweist.

3. Abstandshalter nach Anspruch 1, **dadurch gekennzeichnet, dass** die Abdeckkappe (14) mindestens eine seitlich nach außen abstehende Drehsicherungseinrichtung (17) aufweist.

4. Abstandshalter nach Anspruch 1, **dadurch gekennzeichnet, dass** der Isolierkörper (3) einen Werkzeugsitz (8) zu einem durch Formschluss drehfesten Ansetzen eines Drehwerkzeugs an seinem hinteren Ende aufweist, und dass die Abdeckkappe (14) eine zum Werkzeugsitz komplementäre Aufnahme (18) aufweist, mit der die Abdeckkappe (14) durch Formschluss drehfest auf den Werkzeugsitz (8) des Isolierkörpers (3) aufsetzbar ist.

5. Abstandshalter nach Anspruch 1, **dadurch gekennzeichnet, dass** die Abdeckkappe (14) eine lochscheibenförmige Kopfplatte (15) als Anlage für einen zu befestigenden Gegenstand aufweist.

## Claims

1. Spacer for attachment of an article to a wall (22) having an insulating layer (21) and a stucco layer (20), having a screw (2), and having an insulating body (3), which is essentially a rotational body, which is mounted at the rear end of the screw (2) coaxially with respect to the screw (2) and extending the screw (2) beyond its rear end, which insulating body has a screw-in hole (12) at the rear end for screwing a fixing screw into the spacer (1) from the rear, **characterized in that** the insulating body (3) has a cover cap (14) which is mountable on the rear end of the insulating body (3) remote from the screw (2) so as to be interlockingly secured against relative rotation, and the cover cap (14) has a non-circular outline which, for the purpose of interlocking engagement with the stucco layer (2), projects laterally beyond the insulating body (3) at at least one peripheral location to secure against relative rotation.

2. Spacer according to claim 1, **characterized in that** the cover cap (14) comprises a polygon (16).

3. Spacer according to claim 1, **characterized in that** the cover cap (14) has at least one anti-rotation device (17) projecting laterally outwards.

4. Spacer according to claim 1, **characterized in that** the insulating body (3) has at its rear end a tool seat (8) for application of a rotary tool so as to be interlockingly secured against relative rotation, and the cover cap (14) has a seating (18), complementary to the tool seat, with which the cover cap (14) is mountable on the tool seat (8) of the insulating body (3) so as to be interlockingly secured against relative rotation.

5. Spacer according to claim 1, **characterized in that** the cover cap (14) has a head plate (15) in the form of an apertured disc as bearing for an article to be attached.

## Revendications

1. Pièce d'entretoisement pour la fixation d'un objet à une paroi (22) dotée d'une couche isolante (21) et d'une couche d'enduit (20), comprenant une vis (2) et un corps isolant (3) revêtant, pour l'essentiel, la forme d'un corps rotatif qui est implanté coaxialement à la vis (2) à l'extrémité postérieure de ladite vis (2), en constituant un prolongement de ladite vis (2) au-delà de son extrémité postérieure, et est muni d'un trou de vissage (12), à une extrémité postérieure, en vue du vissage par-derrière d'une vis de fixation dans ladite pièce d'entretoisement (1), **caractérisée par le fait que** le corps isolant (3) comporte un capuchon de recouvrement (14) pouvant être mis en place, par concordance de formes et avec verrouillage rotatif, sur une extrémité postérieure dudit corps isolant (3) qui est tournée à l'opposé de la vis (2) ; et **par le fait que** ledit capuchon de recouvrement (14) possède un profil non circulaire qui fait saillie latéralement au-delà du corps isolant (3) en vue d'une venue en prise avec la couche d'enduit (20), par concordance de formes, afin d'assurer le verrouillage rotatif dans au moins une zone périphérique.

2. Pièce d'entretoisement selon la revendication 1, **caractérisée par le fait que** le capuchon de recouvrement (14) présente une configuration polygonale (16).

3. Pièce d'entretoisement selon la revendication 1, **caractérisée par le fait que** le capuchon de recouvrement (14) comporte au moins un système d'arrêt rotatif (17) faisant latéralement saillie vers l'extérieur.

4. Pièce d'entretoisement selon la revendication 1, **caractérisée par le fait que** le corps isolant (3) comporte, à son extrémité postérieure, un siège d'outil (8) destiné à l'engagement avec verrouillage rotatif, par concordance de formes, d'un outil imprimant une rotation ; et **par le fait que** le capuchon de recouvrement (14) offre un logement (18) complémentaire du siège d'outil et par lequel ledit capuchon de recouvrement (14) peut être mis en place, par concordance de formes et avec verrouillage rotatif, sur ledit siège d'outil (8) du corps isolant (3).

5. Pièce d'entretoisement selon la revendication 1, **caractérisée par le fait que** le capuchon de recouvrement (14) présente une platine frontale (15) en forme de rondelle perforée, offrant un contact à un objet devant être fixé.
